# FASCICULE DE BREVET EUROPEEN

(11) **EP 4 522 673 B1**
(45) Date de publication et mention de la délivrance du brevet: **15.04.2026**
(21) Numéro de dépôt: 23726088.0
(22) Date de dépôt: 11.05.2023
(51) Int. Cl.: C08G 59/40, C08J 5/24, C08K 5/50, F17C 1/16

(54) **COMPOSITION A CUISSON RAPIDE ET BASSE TEMPERATURE POUR LA FABRICATION DE RESERVOIRS SOUS PRESSION EN MATERIAU COMPOSITE POUR LE STOCKAGE EMBARQUE DE L'HYDROGENE GAZEUX**
SCHNELLHÄRTENDE NIEDERTEMPERATURZUSAMMENSETZUNG ZUR HERSTELLUNG VON DRUCKBEHÄLTERN AUS EINEM VERBUNDWERKSTOFF ZUR BORDEIGENEN SPEICHERUNG VON WASSERSTOFFGAS
RAPID-CURING, LOW-TEMPERATURE COMPOSITION FOR THE PRODUCTION OF PRESSURISED TANKS MADE OF A COMPOSITE MATERIAL FOR THE ON-BOARD STORAGE OF HYDROGEN GAS

(30) Priorité: 11.05.2022 FR 2204456
(43) Date de publication de la demande: 19.03.2025
(73) Titulaire: Commissariat à l'Energie Atomique et aux Energies Alternatives, 75015 Paris (FR); Institut National des Sciences Appliquées de Lyon, 69621 Villeurbanne Cedex (FR); Vitech Composites, 37800 Sainte-Maure-de-Touraine (FR); Centre National de la Recherche Scientifique, 75794 Paris (FR); UNIVERSITE CLAUDE BERNARD - LYON 1, 69100 Villeurbanne (FR); Universite Jean Monet Saint Etienne, 42023 Saint-Etienne Cedex 2 (FR)
(72) Inventeur: MAGNIER, Christophe, 37260 MONTS (FR); VILLALONGA, Stéphane, 37260 MONTS (FR); JEGOU, Martin, 95810 ARRONVILLE (FR); LIVI, Sébastien, 69100 VILLEURBANNE (FR); GERARD, Jean-François, 69500 BRON (FR); DUCHET-RUMEAU, Jannick, 01600 SAINTE-EUPHEMIE (FR); DEMARET, Frédéric, 37800 POUZAY (FR)
(74) Mandataire: Gevers & Orès
(86) Numéro de dépôt international: PCT/EP2023/062546
(87) Numéro de publication internationale: WO 2023/217934

(56) Documents cités:
- WO-A1-2021/153584
- US-A1- 2021 230 384
- US-B2- 11 034 833

## Description

### Domaine technique de l'invention

La présente invention se rapporte au domaine de la fabrication des réservoirs comprenant un matériau composite, fonctionnant sous pression, de types II, III, IV, et V, pour le stockage de l'hydrogène gazeux et de tout autre gaz d'intérêt sous pression, pour des applications à la fois fixes, transportables et mobiles, comme par exemple, les infrastructures de stockage de l'hydrogène, le transport de l'hydrogène en vue du ravitaillement, les véhicules ferroviaires à hydrogène, les bus, camions, les avions, les bateaux et autres véhicules à hydrogène, et les voitures à hydrogène.

### Arrière-plan technique

Aujourd'hui, les systèmes de stockage embarqué de l'hydrogène gazeux dans des réservoirs sous pression pour les applications de mobilité existent mais seuls quelques fabricants commercialisent quelques milliers ou dizaines de milliers de réservoirs homologués par an. Avec l'émergence du marché lié à la mobilité à faible émission carbone, au stockage sous pression, il n'y a pas de chaîne d'approvisionnement (transformation des matières premières et des composants en un produit fini qui est livré au client final) prête pour la production de masse (millions d'unité par an) à un coût modéré. Par exemple, le stockage compact, fiable, sûr et économique de l'hydrogène gazeux sous 700 bars est un défi majeur pour la commercialisation généralisée des véhicules électriques à pile à combustible (Fuel Cell Electric Vehicle ou FCEV en anglais) et d'autres applications de piles à combustible. Alors que certains FECV légers avec une autonomie de plus de 500 km font leur apparition depuis 2015, le stockage d'hydrogène à bord économiquement abordable reste toujours un obstacle majeur et la quantité de réservoirs fabriqués reste faible. Une grande partie des efforts des programmes de stockage de l'hydrogène se concentre sur le développement de technologies de stockage de l'hydrogène rentables avec une densité d'énergie améliorée (capacité gravimétrique voisine de 6%, c'est-à-dire que 6% de la masse du système de stockage est de l'hydrogène).

Les réservoirs d'hydrogène pour les applications automobiles, bus, camion, trains, avions, bateaux, sont déjà disponibles mais ils ne répondent pas encore à toutes les attentes des constructeurs dans la perspective d'une production de masse de systèmes fonctionnant à l'hydrogène. Cela est vrai en ce qui concerne la fabrication des réservoirs H₂ mais aussi pour le déploiement et l'utilisation des moyens de mobilité à pile à combustible.

Même si le coût de fabrication des réservoirs fonctionnant sous pression de types II, III, IV et V comprenant un matériau composite pour le stockage embarqué de l'hydrogène gazeux représente environ 10% à 30% du coût du système de stockage, la capacité de production de masse est un défi majeur pour les intégrateurs automobiles. L'étape de polymérisation (appelée également durcissement ou cuisson) de la matrice du matériau composite assurant la résistance à la pression, est l'étape principale qui limite, aujourd'hui, la vitesse de fabrication du réservoir. La matrice du matériau composite des réservoirs fonctionnant sous pression est généralement une matrice époxyde.

US2021/230384A1 décrit une composition pour agent de coiffage comprenant une résine époxyde, une N,N-diglycidyl aniline, la dicyanamide comme durcisseur et un catalyseur.

Pour pouvoir produire plusieurs millions de véhicules par an, la durée de polymérisation des matrices des matériaux composites utilisés pour les réservoirs de types II, III, IV et V doit être considérablement réduite.

Aujourd'hui, avec des matrices époxydes, la durée du processus de polymérisation (ou durcissement) pour un réservoir sous pression de 700 bars est d'environ 12 à 16 heures, ce qui est trop long pour une production de masse telle que celle requise pour l'industrie automobile.

Le procédé d'enroulement filamentaire par la voie humide est, en général, le plus utilisée par les industriels pour la fabrication des réservoirs fonctionnant sous pression de types II, III, IV et V.

Ainsi, il existe un réel besoin d'une nouvelle composition à base de résine époxyde spécifique au procédé d'enroulement filamentaire par la voie humide pour la fabrication des réservoirs fonctionnant sous pression de types II, III, IV et V, comprenant un matériau composite, notamment pour le stockage embarqué de l'hydrogène gazeux, qui soit capable de répondre aux contraintes de production de masse et qui soit industriellement intéressante.

En particulier, il existe un réel besoin d'une composition à base de résine époxyde telle que décrite ci-dessus qui permette de réduire sensiblement la durée de l'étape de polymérisation de la matrice du matériau composite pour minimiser le temps de cycle de fabrication d'un réservoir.

Par ailleurs, dans certains cas notamment lorsque le réservoir est muni d'un revêtement interne ou vessie en polyéthylène, une polymérisation à des températures inférieures ou égales à 170°C peut être souhaitée par les industriels.

Il existe donc un réel besoin d'une composition à base de résine époxyde telle que décrite ci-dessus qui permette aux industriels d'adapter aisément la température de l'étape de polymérisation à la nature de la vessie (ou du liner en anglais) lorsqu'il y en a une. Ainsi, l'étape de polymérisation peut être réalisée de manière optimale à toute température et même à basse température, c'est-à-dire à des températures maximales inférieures ou égales à 170°C, par exemple à des températures maximales pouvant aller de 60°C à 170°C, de 60°C à 150°C, de 60°C à 130°C, de 60°C à 110°C, de 60°C à 105°C.

La basse température permet d'utiliser un plus grand choix de matériaux pour la vessie (appelée également revêtement interne ou liner en anglais), et également d'avoir plus de latitudes pour contrôler l'exothermie de la cuisson notamment lorsque l'épaisseur de matériau composite est importante, par exemple une épaisseur de 2 à 5 cm.

Pour y parvenir, la présente invention propose une nouvelle composition à base de résine époxyde pour le matériau composite qui tient compte des contraintes techniques et réglementaires liées aux réservoirs composites pression de types II, III, IV et V, pour le stockage de l'hydrogène embarqué.

### Résumé de l'invention

La présente invention concerne une composition (C) caractérisé en ce qu'elle comprend
(A) 70 à 95 parts en masse d'une résine époxyde de viscosité inférieure ou égale à 20 Pa.s, de préférence entre 1 et 20 Pa.s, plus préférentiellement entre 1 et 10 Pa.s, à une température comprise entre 20°C et 25°C, et
(B) 5 à 30 parts en masse un durcisseur dispersé dans la résine,

pour 100 parts en masse de résine présente dans la composition,
et en ce que le durcisseur est un liquide ionique contenant un cation phosphonium de formule P(R₁R₂R₃R₄)⁺ dans laquelle R₁, R₂, R₃ et R₄, identiques ou différents, représentent un atome d'hydrogène, un radical alkyle ayant 1 à 18 atomes de carbone, un radical aryle ayant 6 à 20 atomes de carbone, lesdits radicaux alkyle et aryle étant éventuellement substitués, et
   - un anion acétate de formule (R₅CO₂)⁻ dans laquelle R₅ représente un atome d'hydrogène, un radical alkyle ayant 1 à 18 atomes de carbone, un radical aryle ayant 6 à 20 atomes de carbone, lesdits radicaux alkyle et aryle étant éventuellement substitués, ou
   - un anion phosphinate de formule (PO₂R₆R₇)⁻ dans laquelle R₆ et R₇, identiques ou différents, représentent un atome d'hydrogène, un radical alkyle ayant 2 à 16 atomes de carbone, un radical aryle ayant 6 à 20 atomes de carbone, lesdits radicaux alkyle et aryle étant éventuellement substitués.

Les réservoirs comprenant un matériau composite fonctionnant sous pression sont classés par catégories :
- les réservoirs de type II, dits frettés, sont métalliques renforcés par un enroulement circonférentiel de fibre sur la partie cylindrique uniquement, en général, avec de carbone ou de verre (renfort composite),
- les réservoirs de type III, disposent d'une enveloppe métallique (appelée également un revêtement interne ou vessie ou liner en anglais), barrière au gaz, et d'un renfort composite sur l'ensemble de la surface externe,
- les réservoirs de type IV, qui diffèrent du type III par un liner en polymère, et
- les réservoirs de type V, qui diffèrent du type IV par l'absence du liner en polymère.

Par exemple, le réservoir sous pression de type IV, en matériau composite, est constitué d'un revêtement interne en matériau polymère, appelé également vessie ou liner en anglais, le plus souvent thermoplastique, avec des connecteurs métalliques, appelés embases ou boss en anglais, à une ou aux deux extrémités. Les embases assurent la connexion du réservoir avec le système de stockage. Le liner assure l'étanchéité à l'hydrogène. Cet ensemble est recouvert d'un matériau composite structurant, assurant la structuration à la pression interne, habituellement comprenant une matrice thermodurcissable, le plus souvent une résine époxyde, et un renfort le plus souvent à base de fibres longues, par exemple, de carbone ou de verre.

La présente invention vise donc à soutenir le développement de systèmes de stockage embarqués de l'hydrogène gazeux (CGH₂ compressed gaseous hydrogen en anglais, CPV Composite Pressure Vessel) dans des réservoirs sous pression qui sont améliorés, afin d'anticiper le futur déploiement massif des technologies précitées, notamment en se concentrant sur la composition du matériau composite du réservoir, et plus précisément sur la résine et sa réaction de polymérisation qui impacte fortement les cadences de fabrications sur des durées supérieures à 10 heures en général.

La composition de l'invention est particulièrement avantageuse car elle a une polymérisation rapide en comparaison avec les compositions à base de matrices époxydes utilisées aujourd'hui, et ce notamment grâce à l'utilisation de liquides ioniques phosphorés comme durcisseur. En effet, la durée de polymérisation de la matrice époxyde dans une composition selon l'invention est inférieure à 12 heures, inférieure à 10 heures notamment inférieure ou égale à 8 heures, en particulier inférieure ou égale à 6 heures, plus particulièrement inférieure ou égale à 4 heures, et encore plus particulièrement inférieure ou égale à 2 heures.

La composition de l'invention est également particulièrement avantageuse car l'étape de polymérisation peut être réalisée de manière optimale à toute température et même à basse température, c'est-à-dire à des températures maximales inférieures ou égales à 170°C, par exemple à des températures maximales pouvant aller de 60°C à 170°C, de 60°C à 150°C, de 60°C à 130°C, de 60°C à 110°C, de 60°C à 105°C, grâce à l'utilisation de liquides ioniques (B) comme durcisseurs.

Comme indiqué précédemment, la composition selon l'invention tient compte des contraintes techniques et réglementaires liées aux réservoirs composites fonctionnant sous pression, par exemple à une pression comprise entre 200 et 900 bars, pour le stockage de l'hydrogène embarqué. Cette nouvelle composition est spécifique au procédé de mise en oeuvre par enroulement filamentaire par la voie humide qui est en général la plus utilisée par les industriels.

Un autre objet de l'invention est l'utilisation d'une composition (C) selon l'invention pour imprégner un faisceau de fibres (F) par voie humide, les fibres (F) étant choisies parmi
- les fibres organiques choisies parmi les fibres de polyéthylène, de poly(p-phénylène-2,6-benzobisoxazole) ou PBO, d'aramide, de polyamide, de lin, de polyester ou autre fibre organique ;
- les fibres inorganiques choisies parmi les fibres de verre, de carbone, de carbure de silicium, de basalte, ou autre fibre inorganique.

L'imprégnation des fibres peut être réalisée par immersion dans un bain, par contact, par injection ou par pulvérisation. Ces techniques d'imprégnation sont bien connues de l'homme du métier.

Un autre objet de l'invention est un procédé de fabrication de pièces comprenant un matériau composite fonctionnant sous pression, par exemple à une pression comprise entre 200 et 900 bars, par enroulement filamentaire par voie humide, comprenant au moins une étape d'imprégnation d'un faisceau de fibres (F) choisies parmi
- les fibres organiques choisies parmi les fibres de polyéthylène, de poly(p-phénylène-2,6-benzobisoxazole) ou PBO, d'aramide, de polyamide, de lin, de polyester ou autre fibre organique ;
- les fibres inorganiques choisies parmi les fibres de verre, de carbone, de carbure de silicium, de basalte, ou autre fibre inorganique,
par une composition (C) selon l'invention.

Plus particulièrement, le procédé de fabrication de pièces comprenant un matériau composite fonctionnant sous pression comprend au moins les étapes suivantes :
i) imprégnation d'un faisceau de fibres (F) choisies parmi
   - les fibres organiques choisies parmi les fibres de polyéthylène, de poly(p-phénylène-2,6-benzobisoxazole) ou PBO, d'aramide, de polyamide, de lin, de polyester ou autre fibre organique ;
   - les fibres inorganiques choisies parmi les fibres de verre, de carbone, de carbure de silicium, de basalte ,ou autre fibre inorganique.
   d'une composition (C) selon l'invention ;
ii) enroulement des fibres imprégnées autour d'une vessie ou d'un mandrin ;
iii) polymérisation de la composition (C) à une température inférieure ou égale à 170°C.

Ce procédé peut également être utilisé pour la fabrication de pièces comprenant un matériau composite qui ne nécessitent pas un fonctionnement sous pression au sens de l'invention.

La pièce en composite peut être un réservoir fonctionnant sous pression, de types II, III, IV, et V, pour le stockage embarqué de l'hydrogène gazeux. De préférence, la pièce est un réservoir de type IV.

L'imprégnation peut être réalisée par immersion dans un bain contenant une composition (C) selon l'invention, au contact d'une composition (C) selon l'invention, par injection ou par pulvérisation d'une une composition (C) selon l'invention.

La polymérisation peut se faire à des températures maximales inférieures ou égales à 170°C, par exemple à des températures maximales pouvant aller de 60°C à 170°C, de 60°C à 150°C, de 60°C à 130°C, de 60°C à 110°C, de 60°C à 105°C. L'industriel choisira la température en fonction de ses contraintes de fabrication. Ledit faisceau de fibres (F) est imprégné de la composition (C), avec un taux massique de (F) compris entre 40 et 70% et un taux massique de (C) compris entre 30 et 60%.

Le faisceau de fibres peut être sous forme de mèches, de rubans, de nappe ou agrégat de fibres en vrac non tissées, ou sous forme tissé.

La composition (C) selon l'invention peut être utilisé pour la fabrication des réservoirs fonctionnant sous pression de types II, III, IV, et V, comprenant un matériau composite, pour le stockage embarqué de l'hydrogène gazeux, notamment pour des applications à la fois fixes et mobiles, comme par exemple, les infrastructures de stockage de l'hydrogène, le transport de l'hydrogène en vue du ravitaillement, les véhicules ferroviaires à hydrogène, les bus, camions, les avions, les bateaux et autres véhicules à hydrogène, et les voitures à hydrogène. L'invention a donc pour objet l'utilisation d'une composition (C) selon l'invention, pour la fabrication d'un réservoir d'hydrogène, notamment un réservoir sous pression, de types II, III, IV et V, en matériau composite, pour le stockage embarqué de l'hydrogène gazeux.

Dans le contexte de la présente invention, une pièce ou un réservoir est dit fonctionner sous pression, lorsque la pression nominale de fonctionnement est de l'ordre de plusieurs centaines de bars, par exemple à une pression nominale de fonctionnement allant de 200 à 900 bars.

### Description détaillée de l'invention

La présente invention concerne une composition (C) caractérisé en ce qu'elle comprend
(A) 70 à 95 parts en masse d'une résine époxyde de viscosité inférieure ou égale à 20 Pa.s, de préférence entre 1 et 20 Pa.s, plus préférentiellement entre 1 et 10 Pa.s, à une température comprise entre 20°C et 25°C, et
(B) 5 à 30 parts en masse un durcisseur dispersé dans la résine,

pour 100 parts en masse de résine présente dans la composition,
et en ce que le durcisseur est un liquide ionique contenant un cation phosphonium de formule P(R₁R₂R₃R₄)⁺ dans laquelle R₁, R₂, R₃ et R₄, identiques ou différents, représentent un atome d'hydrogène, un radical alkyle ayant 1 à 18 atomes de carbone, un radical aryle ayant 6 à 20 atomes de carbone, lesdits radicaux alkyle et aryle étant éventuellement substitués, et
   - un anion acétate de formule (R₅CO₂)⁻ dans laquelle R₅ représente un atome d'hydrogène, un radical alkyle ayant 1 à 18 atomes de carbone, un radical aryle ayant 6 à 20 atomes de carbone, lesdits radicaux alkyle et aryle étant éventuellement substitués, ou
   - un anion phosphinate de formule (PO₂R₆R₇)⁻ dans laquelle R₆ et R₇, identiques ou différents, représentent un atome d'hydrogène, un radical alkyle ayant 2 à 16 atomes de carbone, un radical aryle ayant 6 à 20 atomes de carbone, lesdits radicaux alkyle et aryle étant éventuellement substitués.

Au sens de l'invention, un radical « alkyle » est un radical carboné linéaire, ramifié ou cyclique, saturé, éventuellement substitué, comprenant généralement de 1 à 18 atomes de carbone, par exemple de 1 à 14 atomes de carbone, par exemple 1 à 10 atomes de carbone. A titre d'alkyle saturé, linéaire ou ramifié, on peut citer par exemple les radicaux méthyle, éthyle, propyle, butyle, pentyle, hexyle, octyle, nonyle, décyle, undécyle, dodécyle, tridécyle, tétradécyle, pentadécyle, hexadécyle, et leurs isomères ramifiés. A titre d'alkyle cyclique, on peut citer les radicaux cyclopropyle, cyclobutyle, cyclopentyle, cyclohexyle, cycloheptyle, cyclooctyle, bicylco[2,1,1] hexyle, bicyclo[2,2,1] heptyle.

Dans le cas spécifique d'un anion phosphinate le radical « alkyle » est un radical carboné linéaire, ramifié ou cyclique, saturé, éventuellement substitué, comprenant généralement de 2 à 16 atomes de carbone, par exemple de 4 à 16 atomes de carbone.

Le terme « aryle » désigne un substituant aromatique mono- ou poly-cyclique comportant généralement 6 à 20 atomes de carbone, par exemple, 6 à 10 atomes de carbone. À titre indicatif, on peut citer les groupes phényle, benzyle, naphtyle, phénanthrényle.

Les radicaux alkyle et aryles peuvent être éventuellement substitués par un ou plusieurs groupes hydroxyle (-OH), un ou plusieurs groupes alcoxy (-O-alkyle) ; un ou plusieurs groupes aryloxy (-O-aryle) ; un ou plusieurs atomes d'halogène choisis parmi les atomes de fluor, chlore, brome et iode ; avec alkyle, et aryle tels que définis dans le cadre de la présente invention.

Dans le cation phosphonium, R₁, R₂, R₃ et R₄, identiques ou différents, représentent
- un atome d'hydrogène,
- un radical alkyle choisi parmi méthyle, éthyle, propyle, butyle, pentyle, hexyle, heptyle, octyle, nonyle, décyle, undécyle, dodécyle, tridécyle, tétradécyle, et leurs isomères ramifiés,
- un radical aryle choisi parmi le phényle, le benzyle,
lesdits radicaux alkyle et aryle étant éventuellement substitués.

Le cation phosphonium peut être choisi parmi [(C₆H₁₃)₃(C₁₄H₂₉)P]⁺, [(C₄H₉)₃(C₁₄H₂₉)P]⁺, [(C₄H₉)₃(C₂H₅)P]⁺, [(C₈H₁₇)₄P]⁺, [(C₄H₉)₃(CH₃)P]⁺, [(iso-C₄H₉)₃(CH₃)P]⁺, [(H)₄P]⁺, [(CH₃)₄P]⁺, [(Ph)₄P]⁺, [(Ph)₃(CH₃)P]⁺, [(C₆H₁₃)₃(C₁₄H₂₉)P]⁺, [(CH₂OH)₄P]⁺.

Plus particulièrement, le cation phosphonium peut être choisi parmi [(C₆H₁₃)₃(C₁₄H₂₉)P]⁺, [(C₄H₉)₃(C₁₄H₂₉)P]⁺, [(C₄H₉)₃(C₂H₅)P]⁺, [(C₈H₁₇)₄P]⁺, [(C₄H₉)₃(CH₃)P]⁺, [(iso-C₄H₉)₃(CH₃)P]⁺, [(C₆H₁₃)₃(C₁₄H₂₉)P]⁺.

Selon un premier mode de réalisation de l'invention, dans la composition, le liquide ionique contient un anion phosphinate de formule (PO₂R₆R₇)⁻ dans laquelle R₆ et R₇, identiques ou différents, représentent un atome d'hydrogène, un radical alkyle ayant 2 à 16 atomes de carbone, un radical aryle ayant 6 à 20 atomes de carbone, lesdits radicaux alkyle et aryle étant éventuellement substitués, et un cation phosphonium tel que défini ci-dessus.

Dans ce premier mode de réalisation, l'anion phosphinate de formule (PO₂R₆R₇)⁻ dans laquelle R₆ et R₇, identiques ou différents, représentent
- un atome d'hydrogène,
- un radical alkyle choisi parmi butyle, pentyle, hexyle, heptyle, octyle, nonyle, décyle, undécyle, dodécyle, tridécyle, tétradécyle, et leurs isomères ramifiés,
- un radical aryle choisi parmi le phényle, le benzyle,
lesdits radicaux alkyle et aryle étant éventuellement substitués.

L'anion phosphinate peut être choisi parmi (PO₂H₂)⁻, (PO₂(C₇H₃₀)₂)⁻, [[(CH₃)₃CCH₂CH(CH₃)CH₂]₂P(O)O]⁻, (PO₂Ph₂)⁻.

Le liquide ionique peut contenir contient un anion phosphinate de formule [[(CH₃)₃CCH₂CH(CH₃)CH₂]₂P(O)O]⁻ et un cation phosphonium tel que défini ci-dessus.

Dans ce premier mode de réalisation, le liquide ionique peut être le trihexyl(tétradécyl)phosphonium bis-2,4,4-(triméthylpentyl)phosphinate ou CYPHOS^{®} IL104 de la société Cytec Industries Inc.

Dans ce premier mode de réalisation, lorsque le liquide ionique contient un anion phosphinate tel que décrit ci-dessus, la composition comprend 5 à 20 parts en masse de liquide(s) ionique(s), pour 100 parts en masse de résine époxyde présente dans la composition.

Dans toutes les variantes et modes de réalisation de l'invention, la composition (C) peut être polymérisée sous l'action de la température en fonction de l'application souhaitée et les caractéristiques recherchées. L'homme du métier saura choisir et adapter ces conditions.

Selon un deuxième mode de réalisation de l'invention, la composition comprend un liquide ionique qui contient un anion acétate de formule (R₅CO₂)⁻ dans laquelle R₅ représente un atome d'hydrogène, un radical alkyle ayant 1 à 18 atomes de carbone, un radical aryle ayant 6 à 20 atomes de carbone, lesdits radicaux alkyle et aryle étant éventuellement substitués, et un cation phosphonium tel que défini ci-dessus.

Dans ce deuxième mode de réalisation, dans l'anion acétate, R₅ représente
- un atome d'hydrogène,
- un radical alkyle choisi parmi méthyle, éthyle, propyle, butyle, pentyle, hexyle, heptyle, octyle, , nonyle, décyle, undécyle, dodécyle, tridécyle, tétradécyle, et leurs isomères ramifiés, et leurs isomères ramifiés,
- un radical aryle choisi parmi le phényle, le benzyle,
lesdits radicaux alkyle et aryle étant éventuellement substitués.

L'anion acétate peut être choisi parmi ((CH₃)CO₂)⁻, ((C₅H₁₁)CO₂)⁻, ((CH₃CH₂CH(CH₃)CH₂CH₂)CO₂)⁻, ((C₇H₁₅)CO₂)⁻, ((CH₃CH₂CH₂CH₂CH(CH₃)CH₂CH₂)CO₂)⁻, ((CH₃)₃CCH₂CH(CH₃)CH₂CH₂CH₂)CO₂)⁻, (CH₃CH(CH₃)CH₂CH₂CH₂CH(CH₃)CH₂)CO₂)⁻, ((C₉H₁₉)CO₂)⁻.

Dans ce deuxième mode de réalisation, lorsque le liquide ionique contient un anion acétate tel que décrit ci-dessus, la composition comprend 5 à 20 parts en masse de liquide ionique, pour 100 parts en masse de résine époxyde présente dans la composition.

Dans cet autre mode de réalisation, le liquide ionique peut être le trihexyl(tétradécyl)phosphonium décanoate ou CYPHOS^{®} IL 103 de la société Strem Chemicals Inc.

La résine époxyde (A) présente dans la composition peut être, par exemple, de type bisphénol, comme le bisphénol A, le bisphénol B, le bisphénol F, le bisphénol S, l'ortho-, le méta-, le para-crésol novolac.

La résine époxyde (A) peut être la résine Araldite^{®} LY 566 de type bisphénol A, commercialisée par la société Huntsman.

La résine époxyde (A) a une viscosité inférieure ou égale à 20 Pa.s, de préférence entre 1 et 20 Pa.s, plus préférentiellement entre 1 et 10 Pa.s, à une température comprise entre 20°C et 25°C.

La viscosité est mesurée à une température comprise entre 20°C et 25°C, utilisant un appareil Rhéomètre ARES, de la société TA^{®} instruments. Le rhéomètre ARES utilise une géométrie plan/plan avec des disques aluminium de 25 mm (géométrie supérieure) et 40 mm (géométrie inférieure). La composition est déposée à chaud (60 °C) sur les géométries puis refroidie à une température comprise entre 20°C et 25°C pour réaliser la mesure de viscosité. L'essai « DFS » Dynamic Frequency Sweep (strain controlled) 1-100 rad/s est réalisé avec une déformation d'environ 10 %. La mesure de viscosité est relevée pour une fréquence de 6 rad/s.

La composition selon l'invention peut être préparée par un mélange des composants (A) et (B) comme indiqué dans les exemples. En particulier, le procédé consiste à mélanger une résine époxyde (A) et d'un liquide ionique (B) tels que définis ci-dessus, jusqu'à l'obtention d'une composition homogène, à une température qui évite l'amorçage de la polymérisation de (A).

La composition peut être préparée dans un réacteur simple (en verre) muni d'une pale d'agitation et sous air. La température peut être contrôlée par une plaque chauffante et un bain d'huile silicone.

Le mélange continu est un procédé de dosage en continu des ingrédients directement dans la zone de mélange et, par conséquent, la génération d'un flux continu de produit mélangé à la sortie du mélangeur. Ce principe garantit un contrôle parfait du point de rencontre des ingrédients et donc une qualité de répartition unique pour le produit mélangé. Le produit obtenu est donc sous forme d'un mélange homogène. Tout mélangeur en continu connu de l'homme du métier peut convenir pour la fabrication de la composition.

Sans vouloir être lié par la théorie, les inventeurs ont constaté que l'utilisation de liquides ioniques tels que décrits ci-dessus comme durcisseurs dans une composition selon l'invention permet une polymérisation *via* un mécanisme catalytique et non d'addition. Les liquides ioniques permettent de réduire la quantité d'agent de polymérisation ou durcisseur nécessaire à la polymérisation complète de la matrice époxyde *(i.e.* 20-50 parties pour 100 parts de résine ou phr, pour les systèmes amines standards). En effet, le liquide ionique, sous l'effet de la température, va permettre l'ouverture de cycle oxiranne par l'attaque nucléophile de l'anion sur le carbone α de cette fonction.

Cette réaction dite d'activation, conduit à la formation d'alcoolate, fonction réactive vis-à-vis des autres motifs époxyde. Une deuxième étape dite de propagation consiste en l'homopolymérisation des motifs alcoolates formés sur les cycles oxiranes.

Dans les conditions de températures adaptées, cette réaction se poursuit jusqu'à la réticulation complète de la matrice époxyde (conversion > 95 %).

Il est à noter que grâce à l'utilisation de liquides ioniques tels que décrits ci-dessus, la composition (C) a une polymérisation rapide en comparaison avec les compositions à base de matrices époxydes utilisées aujourd'hui. En effet, la durée de polymérisation de la matrice époxyde dans une composition (C) selon l'invention est inférieure à 12 heures, inférieure à 10 heures notamment inférieure ou égale à 8 heures, en particulier inférieure ou égale à 6 heures, plus particulièrement inférieure ou égale à 4 heures, et encore plus particulièrement inférieure ou égale à 2 heures.

Un autre objet de l'invention est l'utilisation d'une composition (C) selon l'invention pour imprégner un faisceau de fibres (F) par voie humide, les fibres (F) étant choisies parmi
- les fibres organiques choisies parmi les fibres de polyéthylène, de poly(p-phénylène-2,6-benzobisoxazole) ou PBO, d'aramide, de polyamide, de lin, de polyester ou autre fibre organique ;
- les fibres inorganiques choisies parmi les fibres de verre, de carbone, de carbure de silicium, de basalte, ou autre fibre inorganique.

Le faisceau de fibres (F) peut être sous forme de mèches, de rubans, de nappe ou agrégat de fibres en vrac non tissées, ou sous forme tissé.

Le faisceau de fibres de renforcement comprend, de préférence, 1000 à 70000 filaments ayant un diamètre de 3 à 100 µm.

De préférence, les fibres (F) sont des fibres de carbone. A ce titre on peut citer les fibres de carbone TORAYCA T720 de la société Toray^{®}.

Un autre objet de l'invention est un procédé de fabrication de pièces comprenant un matériau composite fonctionnant sous pression, mis en oeuvre par enroulement filamentaire par voie humide, comprenant au moins une étape d'imprégnation d'un faisceau de fibres (F) choisies parmi
- les fibres organiques choisies parmi les fibres de polyéthylène, de poly(p-phénylène-2,6-benzobisoxazole) ou PBO, d'aramide, de polyamide, de lin, de polyester ou autre fibre organique ;
- les fibres inorganiques choisies parmi les fibres de verre, de carbone, de carbure de silicium, de basalte, ou autre fibre inorganique.
par une composition (C) selon l'invention.

Plus particulièrement, le procédé de fabrication de pièces comprenant un matériau composite fonctionnant sous pression comprend au moins les étapes suivantes :
i) imprégnation d'un faisceau de fibres (F) choisies parmi
   - les fibres organiques choisies parmi les fibres de polyéthylène, de poly(p-phénylène-2,6-benzobisoxazole) ou PBO, d'aramide, de polyamide, de lin, de polyester ou autre fibre organique ;
   - les fibres inorganiques choisies parmi les fibres de verre, de carbone, de carbure de silicium, de basalte, ou autre fibre inorganique,
   d'une composition (C) selon l'invention ;
ii) enroulement des fibres imprégnées autour d'une vessie ou d'un mandrin ;
iii) polymérisation de la composition (C) à une température inférieure ou égale à 170°C.

Comme déjà indiqué, le procédé de l'invention permet également la fabrication de pièces comprenant un matériau composite ne nécessitant pas un fonctionnement sous pression au sens de l'invention.

La pièce comprenant un matériau composite peut être un réservoir fonctionnant sous pression, de types II, III, IV, et V, pour le stockage embarqué de l'hydrogène gazeux. De préférence, la pièce est un réservoir de type IV.

La mise en œuvre par enroulement filamentaire par voie humide est un procédé bien connu de l'homme du métier. Dans le cadre de ce procédé, les fibres (F) sont alimentées en continu à partir d'un rouleau et traversent un bain contenant une composition (C) avant d'être enroulées autour d'une vessie ou d'un mandrin.

Ledit faisceau de fibres (F) est imprégné de la composition (C), avec un taux massique de (F) compris entre 40 et 70% et un taux massique de (C) compris entre 30 et 60%.

Le faisceau de fibres (F) peut être sous forme de mèches, de rubans, de nappe ou agrégat de fibres en vrac non tissées, ou sous forme tissé.

Dans l'étape i), l'imprégnation du faisceau de fibres (F) en mouvement par la composition (C) est réalisée en continu dans un bain contenant ladite composition (C) selon l'invention, à une température pouvant aller de 10 à 80°C, par exemple de 10 à 50°C.

La durée de cette imprégnation peut aller de quelques secondes à quelques minutes, par exemple, de 10 secondes à 5 minutes.

Le bain d'imprégnation contient la composition (C) selon l'invention.

Après l'étape (i), les fibres imprégnées sont enroulées sur un mandrin, à une température inférieure ou égale à 30°C, par exemple entre 20 et 30°C.

Dans l'étape (i), l'imprégnation du faisceau de fibres (F) par la composition (C) peut se faire par des techniques bien connues de l'homme du métier, comme celles citées précédemment.

Ledit faisceau de fibres (F) est imprégné de la composition (C), avec un taux massique de (F) compris entre 40 et 70% et celui de (C) compris entre 30 et 60%. La mise en œuvre par enroulement filamentaire par voie humide est particulièrement adapté à la fabrication de pièces comprenant un matériau composite fonctionnant à une pression nominale de fonctionnement telle que définie ci-dessus, comme par exemple, des réservoirs de stockage fonctionnant sous pression.

L'étape d'enroulement des fibres imprégnées ii) est réalisée de manière continue autour d'un mandrin en rotation. L'enroulement est effectué autour d'un liner en polymère pour les réservoirs de type IV, ou autour d'un mandrin métallique pour les réservoirs de type Il et III, ou autour d'un mandrin soluble ou amovible pour les réservoirs de type V.

Le système de dépose des fibres est réalisé par un guidage des fibres se déplace d'avant en arrière et latéralement pendant la rotation du liner ou du mandrin, de sorte que ces fibres soient enroulées et ou déposées de façon uniforme.

Deux méthodes de dépôts des fibres peuvent être employées lors de la fabrication d'une pièce cylindrique ou sphérique. L'enroulement circonférentiel qui permet d'avoir la couche de fibres déposées avec une orientation de 90° par rapport à l'axe du liner et l'enroulement hélicoïdal qui permet d'avoir la couche de fibres déposées avec une orientation autre que 90°. Ces deux techniques sont bien connues de l'homme du métier et sont décrits, par exemple, dans Hojjati et al., Composites Engineering, Vol. 5, Pages 51-59, 1995 ; De Carvalho et al., Composites Manufacturing, Vol. 6, Pages 79-84, 1995 ; Koussios et al., Journal of Materials Design and Applications, Vol. 219, Pages 25-35, 2005 ; Zu et al., Interfacial Interactions in Composites and Other Applications, Vol. 41, Pages 1312-1320, 2010.

A la fin de la phase de dépose par enroulement, au cours de l'étape iii), la polymérisation peut se faire à des températures maximales inférieures ou égales à 170°C, par exemple à des températures maximales pouvant aller de 60°C à 170°C, de 60°C à 150°C, de 60°C à 130°C, de 60°C à 110°C, de 60°C à 105°C. L'industriel choisira la température en fonction de ses contraintes de fabrication.

Cette étape iii) a, en général, lieu dans une étuve ou un four tunnel. Le chauffage est maintenu jusqu'à la polymérisation complète de la matrice époxyde de la composition (C) (conversion > 95 %).

La mise en oeuvre par enroulement filamentaire peut être effectuée également sur une vessie ou liner en polymère, notamment une vessie ou liner en polyéthylène ou en polyamide.

Le liner est le revêtement interne du réservoir. Il a deux fonctions principales, assurer l'étanchéité de la structure et jouer le rôle de mandrin. En effet, sa mise en rotation permet de déposer les fibres préalablement imprégnées de la composition (C) directement sur sa surface extérieure.

Selon un mode de réalisation, le liner est en polyéthylène.

Selon un autre mode de réalisation, le liner en polyamide.

Selon un autre mode de réalisation, le liner est métallique, comme l'aluminium ou l'inox.

La composition (C) selon l'invention a une cuisson rapide (seulement quelques heures) et à basse température comme indiqué précédemment, durant la fabrication des réservoirs en composite sous pression de types II, III, IV et V, pour le stockage embarqué de l'hydrogène gazeux. La cuisson rapide et la possibilité d'une cuisson à basse température de la composition sont essentiellement dues à l'utilisation du liquide ionique (B) comme durcisseur.

La composition (C) comprend une résine époxyde (A) car ce type de polymère thermodurcissable est le plus communément utilisé pour la fabrication des réservoirs sous pression pour le stockage embarqué de l'hydrogène.

La composition (C) selon l'invention peut donc être utilisée pour la fabrication des réservoirs sous pression de types II, III, IV et V, en matériau composite, pour le stockage embarqué de l'hydrogène gazeux, notamment pour des applications à la fois fixes et mobiles, comme par exemple, les infrastructures de stockage de l'hydrogène, le transport de l'hydrogène en vue du ravitaillement, les véhicules ferroviaires à hydrogène, les bus, camions, les avions, les bateaux et autres véhicules à hydrogène, et les voitures à hydrogène.

L'invention a donc pour objet l'utilisation d'une composition (C) selon l'invention, pour la fabrication d'un réservoir d'hydrogène, notamment un réservoir sous pression, de types II, III, IV et V, en matériau composite, pour le stockage embarqué de l'hydrogène gazeux.

Les réservoirs ainsi obtenus peuvent être homologués suivant les critères des règlementations actuellement en vigueur (comme par exemple l'EC79 ou la R134).

### EXEMPLES

### Protocole de préparation d'une composition selon l'invention

La résine époxyde Araldite^{®} LY 566, commercialisée par la société Hunstman, et de type bisphénol A présente une viscosité de 10 Pa.s à 20°C. La résine époxyde Araldite^{®} LY 566 est liquide à température ambiante (20°C - 25°C).

La résine est introduite dans un réacteur thermostaté puis le liquide ionique CYPHOS^{®} IL 104 (trihexyl(tétradécyl)phosphonium bis-2,4,4-(triméthylpentyl) phosphinate ou [R₄PA]), commercialisé par Cytec Industries Inc. ou le liquide ionique CYPHOS^{®} IL 103 (trihexyl(tétradécyl)phosphonium décanoate), commercialisé par Strem Chemicals, est ajouté à hauteur de 10 parties en poids ou pp ou phr en anglais (10 parties Cyphos^{®} LI 103 pour 100 parties de résine LY 556). Le mélange est agité pendant environ 20 minutes à 40°C.

Une fois homogénéisée, une composition selon l'invention est obtenue et peut être utilisée pour l'imprégnation des fibres de renfort. Lors de cette étape, la composition est diffusée en continu sur une mèche de fibre de carbone TORAYCA T720 de la société Toray^{®} à une température comprise entre 10 et 50°C. Cette température est à adapter par l'homme de métier qui saura le faire.

La mèche imprégnée de la composition (résine + liquide ionique) peut alors être enroulée sur le liner.

### Cycle de cuisson

Les cycles de cuissons proposés pour la polymérisation d'une composition telle que préparée ci-dessus sont de 5h avec une étape de polymérisation durant :
2h à 80 °C puis 3h à 130 °C, ou 2h à 80 °C puis 3h à 105 °C pour le liquide ionique CYPHOS^{®} IL 104 ;
1h à 50 °C, puis 1h à 70 °C, puis 3h à 105°C ou à 130 °C CYPHOS^{®} IL 103.

En résumé, les compositions selon l'invention peuvent être utilisées pour la préparation de réservoirs pendant 1 à 2 jours pour des applications d'enroulement filamentaire par voie humide notamment pour des réservoirs hydrogène de type IV. Ces compositions répondent à la problématique des temps de cuisson en proposant des temps de polymérisation sur composite épais (> 30 mm) inférieur à 5h. De plus, ces compositions sont utilisables aussi bien avec des liners en polyéthylène (PE) qu'en polyamide (PE), les deux principaux matériaux polymères employés pour la fabrication de réservoirs hydrogène de type IV. Enfin, ces compositions permettent de remplacer les durcisseurs amines, répréhensibles en termes de santé.

## Revendications

1. Composition (C) **caractérisé en ce qu'**elle comprend
(A) 70 à 95 parts en masse d'une résine époxyde de viscosité inférieure ou égale à 20 Pa.s, de préférence entre 1 et 20 Pa.s, plus préférentiellement entre 1 et 10 Pa.s, à une température comprise entre 20°C et 25°C, et
(B) 5 à 30 parts en masse un durcisseur dispersé dans la résine,
pour 100 parts en masse de résine présente dans la composition,
et **en ce que** le durcisseur est un liquide ionique contenant un cation phosphonium de formule P(R₁R₂R₃R₄)⁺ dans laquelle R₁, R₂, R₃ et R₄, identiques ou différents, représentent un atome d'hydrogène, un radical alkyle ayant 1 à 18 atomes de carbone, un radical aryle ayant 6 à 20 atomes de carbone, lesdits radicaux alkyle et aryle étant éventuellement substitués, et
- un anion acétate de formule (R₅CO₂)⁻ dans laquelle R₅ représente un atome d'hydrogène, un radical alkyle ayant 1 à 18 atomes de carbone, un radical aryle ayant 6 à 20 atomes de carbone, lesdits radicaux alkyle et aryle étant éventuellement substitués,la viscosité étant mesurée tel que détaillé dans la description.

2. Composition selon la revendication 1, **caractérisé en ce que** dans le cation phosphonium R₁, R₂, R₃ et R₄, identiques ou différents, représentent
- un atome d'hydrogène,
- un radical alkyle choisi parmi méthyle, éthyle, propyle, butyle, pentyle, hexyle, heptyle, octyle, nonyle, décyle, undécyle, dodécyle, tridécyle, tétradécyle, et leurs isomères ramifiés,
- un radical aryle choisi parmi le phényle, le benzyle,
lesdits radicaux alkyle et aryle étant éventuellement substitués.

3. Composition selon l'une des revendications 1 ou 2, **caractérisé en ce que** le cation phosphonium est choisi parmi [(C₆H₁₃)₃(C₁₄H₂₉)P]⁺, [(C₄H₉)₃(C₁₄H₂₉)P]⁺, [(C₄H₉)₃(C₂H₅)P]⁺, [(C₈H₁₇)₄P]⁺, [(C₄H₉)₃(CH₃)P]⁺, [(iso-C₄H₉)₃(CH₃)P]⁺, [(H)₄P]⁺, [(CH₃)₄P]⁺, [(Ph)₄P]⁺, [(Ph)₃(CH₃)P]⁺, [(C₆H₁₃)₃(C₁₄H₂₉)P]⁺, [(CH₂OH)₄P]⁺.

4. Composition selon l'une quelconque des revendications 1 à 3, **caractérisé en ce que** le liquide ionique contient un anion acétate de formule (R₅CO₂)⁻, dans laquelle R₅ représente
- un atome d'hydrogène,
- un radical alkyle choisi parmi méthyle, éthyle, propyle, butyle, pentyle, hexyle, heptyle, octyle, , nonyle, décyle, undécyle, dodécyle, tridécyle, tétradécyle, et leurs isomères ramifiés, et leurs isomères ramifiés,
- un radical aryle choisi parmi le phényle, le benzyle,
lesdits radicaux alkyle et aryle étant éventuellement substitués.

5. Composition selon la revendication 4, **caractérisé en ce que** l'anion acetate est choisi parmi ((CH₃)CO₂)⁻, ((C₅H₁₁)CO₂)⁻, ((CH₃CH₂CH(CH₃)CH₂CH₂)CO₂)⁻, ((C₇H₁₅)CO₂)⁻, ((CH₃CH₂CH₂CH₂CH(CH₃)CH₂CH₂)CO₂)⁻, ((CH₃)₃CCH₂CH(CH₃)CH₂CH₂CH₂)CO₂)⁻, (CH₃CH(CH₃)CH₂CH₂CH₂CH(CH₃)CH₂)CO₂)⁻, ((C₉H₁₉)CO₂)⁻.

6. Composition selon l'une des revendications 1 à 5, **caractérisé en ce qu'**elle comprend 5 à 20 parts en masse de liquide ionique, pour 100 parts en masse de résine époxyde présente dans la composition.

7. Utilisation d'une composition (C) selon l'une quelconque des revendications 1 à 6, ou
d'une composition comprenant :
(A) 70 à 95 parts en masse d'une résine époxyde de viscosité inférieure ou égale à 20 Pa.s, de préférence entre 1 et 20 Pa.s, plus préférentiellement entre 1 et 10 Pa.s, à une température comprise entre 20°C et 25°C, mesurée comme détaillé dans la description et
(B) 5 à 30 parts en masse un durcisseur dispersé dans la résine,
pour 100 parts en masse de résine présente dans la composition,
et en ce que le durcisseur est un liquide ionique contenant un cation phosphonium de formule P(R₁R₂R₃R₄)⁺ dans laquelle R₁, R₂, R₃ et R₄, sont tels que définis dans l'une des revendications 1 ou 2, et
- un anion phosphinate de formule (PO₂R₆R₇)⁻ dans laquelle R₆ et R₇, identiques ou différents, représentent
- un atome d'hydrogène,
- un radical alkyle choisi parmi butyle, pentyle, hexyle, heptyle, octyle, nonyle, décyle, undécyle, dodécyle, tridécyle, tétradécyle, et leurs isomères ramifiés,
- un radical aryle choisi parmi le phényle, le benzyle,
lesdits radicaux alkyle et aryle étant éventuellement substituésun atome d'hydrogène, un radical alkyle ayant 2 à 16 atomes de carbone, un radical aryle ayant 6 à 20 atomes de carbone, lesdits radicaux alkyle et aryle étant éventuellement substitués,
pour imprégner un faisceau de fibres (F) par voie humide, les fibres (F) étant choisies parmi
- les fibres organiques choisies parmi les fibres de polyéthylène, de poly(p-phénylène-2,6-benzobisoxazole) ou PBO, d'aramide, de polyamide, de lin, de polyester ;
- les fibres inorganiques choisies parmi les fibres de verre, de carbone, de carbure de silicium, de basalte.

8. Utilisation selon la revendication 7, **caractérisée en ce que** lorsque que la composition utilisée comprend un durcisseur qui est un liquide ionique contenant un anion phosphinate, ledit anion phosphinate est de formule [[(CH₃)₃CCH₂CH(CH₃)CH₂]₂P(O)O]⁻.

9. Procédé de fabrication de pièces comprenant un matériau composite fonctionnant sous pression, **caractérisé en ce qu'**il comprend au moins les étapes suivantes :
i) imprégnation d'un faisceau de fibres (F) choisies parmi
- les fibres organiques choisies parmi les fibres de polyéthylène, de poly(p-phénylène-2,6-benzobisoxazole) ou PBO, d'aramide, de polyamide, de lin, de polyester ;
- les fibres inorganiques choisies parmi les fibres de verre, de carbone, de carbure de silicium, de basalte,
d'une composition (C) selon l'une quelconque des revendications 1 à 6, ou
d'une composition telle que définie dans l'une des revendications 7 ou 8 ;
ii) enroulement des fibres imprégnées autour d'une vessie ou d'un mandrin ;
iii) polymérisation de la composition (C) à une température inférieure ou égale à 170°C.

10. Procédé selon la revendication 9, **caractérisé en ce que** ledit faisceau de fibres (F) est imprégné de la composition (C) selon l'une quelconque des revendications 1 à 6, ou de la composition telle que définie dans l'une des revendications 7 ou 8, avec un taux massique de (F) compris entre 40 et 70% et avec un taux massique de (C) compris entre 30 et 60%.

11. Utilisation d'une composition (C) selon l'une quelconque des revendications 1 à 6, pour la fabrication d'un réservoir d'hydrogène, notamment un réservoir fonctionnant sous pression, de types II, III, IV et V, comprenant un matériau composite, pour le stockage embarqué de l'hydrogène gazeux.

## Patentansprüche

1. Zusammensetzung (C), **dadurch gekennzeichnet, dass** sie umfasst
(A) 70 bis 95 Masseteile eines Epoxidharzes mit einer Viskosität von weniger als oder gleich 20 Pa.s, vorzugsweise zwischen 1 und 20 Pa.s, bevorzugter zwischen 1 und 10 Pa.s, bei einer Temperatur zwischen 20°C und 25°C, und
(B) 5 bis 30 Masseteile eines in dem Harz dispergierten Härters pro 100 Masseteile des in der Zusammensetzung vorhandenen Harzes, und dass der Härter eine ionische Flüssigkeit ist, die ein Phosphoniumkation der Formel P(R₁R₂R₃R₄)⁺ enthält, wobei R₁, R₂, R₃ und R₄, die identisch oder unterschiedlich sind, ein Wasserstoffatom, einen Alkylrest, der 1 bis 18 Kohlenstoffatomen aufweist, einen Arylrest, der 6 bis 20 Kohlenstoffatomen aufweist, darstellen, wobei die Alkyl- und Arylreste gegebenenfalls substituiert sind, und
(C) ein Acetatanion der Formel (R₅CO₂)⁻, wobei R₅ ein Wasserstoffatom, einen Alkylrest, der 1 bis 18 Kohlenstoffatome aufweist, einen Arylrest, der 6 bis 20 Kohlenstoffatome aufweist, darstellt, wobei die Alkyl- und Arylreste gegebenenfalls substituiert sind, wobei die Viskosität wie in der Beschreibung detailliert angegeben gemessen wird.

2. Zusammensetzung nach Anspruch 1, **dadurch gekennzeichnet, dass** in dem Phosphoniumkation R₁, R₂, R₃ und R₄, die identisch oder unterschiedlich sind,
- ein Wasserstoffatom,
- einen Alkylrest, ausgewählt aus Methyl, Ethyl, Propyl, Butyl, Pentyl, Hexyl, Heptyl, Octyl, Nonyl, Decyl, Undecyl, Dodecyl, Tridecyl, Tetradecyl und deren verzweigten Isomeren,
- einen Arylrest, ausgewählt aus Phenyl, Benzyl, darstellen,
wobei die Alkyl- und Arylreste gegebenenfalls substituiert sind.

3. Zusammensetzung nach Anspruch 1 oder 2, **dadurch gekennzeichnet, dass** das Phosphoniumkation ausgewählt ist aus [(C₆H₁₃)₃(C₁₄H₂₉)P]⁺, [(C₄H₉)₃(C₁₄H₂₉)P]+, [(C4H9)3(C2H5)P]⁺, [(C₈H₁₇)₄P]⁺, [(C₄H₉)₃(CH₃)P]⁺, [(iso-C₄H₉)₃(CH₃)P]⁺, [(H)₄P]⁺, [(CH₃)₄P]⁺, [(Ph)₄P]⁺, [(Ph)₃(CH₃)P]⁺, [(C6H₁₃)₃(C₁₄H₂₉)P]⁺, [(CH₂OH)₄P]⁺.

4. Zusammensetzung nach einem der Ansprüche 1 bis 3, **dadurch gekennzeichnet, dass** die ionische Flüssigkeit ein Acetatanion der Formel (RₛCO₂)⁻ enthält, wobei R₅
- ein Wasserstoffatom,
- einen Alkylrest, ausgewählt aus Methyl, Ethyl, Propyl, Butyl, Pentyl, Hexyl, Heptyl, Octyl, Nonyl, Decyl, Undecyl, Dodecyl, Tridecyl, Tetradecyl und deren verzweigten Isomeren,
- einen Arylrest, ausgewählt aus Phenyl, Benzyl, darstellt, wobei die Alkyl- und Arylreste gegebenenfalls substituiert sind.

5. Zusammensetzung nach Anspruch 4, **dadurch gekennzeichnet, dass** das Acetatanion ausgewählt ist aus ((CH₃)CO₂)⁻, ((C₅H₁₁)CO₂)⁻, ((CH₃CH₂CH(CH₃)CH₂CH₂)CO₂)⁻, ((C₇H₁₅)CO₂)⁻, ((CH₃CH₂CH₂CH₂CH(CH₃)CH₂CH₂)CO₂)⁻, ((CH₃)₃CCH₂CH(CH₃)CH₂CH₂CH₂)CO₂)⁻, (CH₃CH(CH₃)CH₂CH₂CH₂CH(CH₃)CH₂)CO₂)⁻, ((C₉H₁₉)CO₂)⁻.

6. Zusammensetzung nach Anspruch 1 bis 5, **dadurch gekennzeichnet, dass** sie 5 bis 20 Masseteile ionische Flüssigkeit pro 100 Masseteile des in der Zusammensetzung vorhandenen Epoxidharzes umfasst.

7. Verwendung einer Zusammensetzung (C) nach einem der Ansprüche 1 bis 6 oder einer Zusammensetzung, die umfasst:
(A) 70 bis 95 Masseteile eines Epoxidharzes mit einer Viskosität von weniger als oder gleich 20 Pa.s, vorzugsweise zwischen 1 und 20 Pa.s, bevorzugter zwischen 1 und 10 Pa.s, bei einer Temperatur zwischen 20°C und 25°C, gemessen wie in der Beschreibung detailliert beschrieben, und
B) 5 bis 30 Masseteile eines in dem Harz dispergierten Härters,
pro 100 Masseteile des in der Zusammensetzung vorhandenen Harzes,
und dass der Härter eine ionische Flüssigkeit ist, die ein Phosphoniumkation der Formel P(R₁R₂R₃R₄)⁺ enthält, wobei R₁, R₂, R₃ und R₄ wie in einem der Ansprüche 1 oder 2 definiert sind, und
- ein Phosphinatanion der Formel (PO₂R₆R₇)⁻, wobei R₆ et R₇, die identisch oder unterschiedlich sind,
- ein Wasserstoffatom,- einen Alkylrest, ausgewählt aus Butyl, Pentyl, Hexyl, Heptyl, Octyl, Nonyl, Decyl, Undecyl, Dodecyl, Tridecyl, Tetradecyl und deren verzweigten Isomeren,
- einen Arylrest, ausgewählt aus Phenyl, Benzyl, darstellen,
wobei die Alkyl- und Arylreste gegebenenfalls substituiert sind mit einem Wasserstoffatom, einem Alkylrest, der 2 bis 16 Kohlenstoffatome aufweist, einem Arylrest, der 6 bis 20 Kohlenstoffatome aufweist, wobei die Alkyl- und Arylreste gegebenenfalls substituiert sind,
zum Imprägnieren eines Faserbündels (F) im Nassverfahren, wobei die Fasern (F) ausgewählt sind aus
- die organischen Fasern, ausgewählt aus die Polyethylen-, Poly(p-phenylen-2,6-benzobisoxazol) oder PBO-, Aramid-, Polyamid-, Leinen-, Polyesterfasern;
- die anorganischen Fasern, ausgewählt aus die Glasfasern, Kohlenstofffasern, Siliziumkarbidfasern, Basaltfasern.

8. Verwendung nach Anspruch 7, **dadurch gekennzeichnet, dass**, wenn die verwendete Zusammensetzung einen Härter umfasst, der eine ionische Flüssigkeit ist, die ein Phosphinanion enthält, das Phosphinanion die Formel [[(CH₃)₃CCH₂CH(CH₃)CH₂]₂P(O)O]⁻ aufweist.

9. Verfahren zur Herstellung von Teilen, umfassend ein unter Druck arbeitendes Verbundmaterial, **dadurch gekennzeichnet, dass** es mindestens die folgenden Schritte umfasst:
i) Imprägnieren eines Faserbündels (F), ausgewählt aus
- die organischen Fasern, ausgewählt aus die Polyethylen-, Poly(p-phenylen-2,6-benzobisoxazol) oder PBO-, Aramid-, Polyamid-, Leinen-, Polyesterfasern;
- die anorganischen Fasern, ausgewählt aus die Glasfasern, Kohlenstofffasern, Siliziumkarbidfasern, Basaltfasern,
einer Zusammensetzung (C) nach einem der Ansprüche 1 bis 6 oder
einer Zusammensetzung, wie in einem der Ansprüche 7 oder 8 definiert;
ii) Aufwickeln der imprägnierten Fasern um eine Blase oder einen Dorn;
iii) Polymerisieren der Zusammensetzung (C) bei einer Temperatur von weniger als oder gleich 170°C.

10. Verfahren nach Anspruch 9, **dadurch gekennzeichnet, dass** das Faserbündel (F) mit der Zusammensetzung (C) nach einem der Ansprüche 1 bis 6 imprägniert wird, oder mit der Zusammensetzung nach einem der Ansprüche 7 oder 8, mit einem Masseanteil von (F) zwischen 40 und 70% und einem Masseanteil von (C) zwischen 30 und 60%.

11. Verwendung einer Zusammensetzung (C) nach einem der Ansprüche 1 bis 6 für die Herstellung eines Wasserstoffbehälters, insbesondere eines unter Druck arbeitenden Behälters der Typen II, III, IV und V, umfassend ein Verbundmaterial, für das integrierte Speichern von Wasserstoffgas.

## Claims

1. A composition (C) **characterized in that** it comprises
(A) 70 to 95 parts by weight of an epoxy resin with a viscosity of less than or equal to 20 Pa.s, preferably between 1 and 20 Pa.s, more preferably between 1 and 10 Pa.s, at a temperature between 20°C and 25°C, and
(B) 5 to 30 parts by weight, per 100 parts by weight of resin present in the composition, of a curing agent dispersed in the resin,
and **in that** the curing agent is an ionic liquid containing a phosphonium cation of formula P(R₁R₂R₃R₄)⁺ wherein R₁, R₂, R₃ and R₄, which may be identical or different, are a hydrogen atom, an alkyl radical with 1 to 18 carbon atoms, an aryl radical with 6 to 20 carbon atoms, said alkyl and aryl radicals optionally being substituted, and
- an acetate anion of formula (R₅CO₂)⁻ wherein R₅ is a hydrogen atom, an alkyl radical with 1 to 18 carbon atoms, an aryl radical with 6 to 20 carbon atoms, said alkyl and aryl radicals optionally being substituted, the viscosity being measured as detailed in the description.

2. The composition according to claim 1, **characterized in that** in the phosphonium cation R₁, R₂, R₃ and R₄, which may be identical or different, are
- a hydrogen atom,
- an alkyl radical selected from methyl, ethyl, propyl, butyl, pentyl, hexyl, heptyl, octyl, nonyl, decyl, undecyl, dodecyl, tridecyl, tetradecyl, and their branched isomers,
- an aryl radical selected from phenyl, benzyl, said alkyl and aryl radicals optionally being substituted.

3. The composition according to one of claims 1 or 2, **characterized in that** the phosphonium cation is selected from [(C₆H₁₃)₃(C₁₄H₂₉)P]⁺, [(C₄H₉)₃(C₁₄H₂₉)P]⁺, [(C₄H₉)₃(C₂H₅)P]⁺, [(C₈H₁₇)₄P]⁺, [(C₄H₉)₃(CH₃)P]⁺, [(iso-C₄H₉)₃(CH₃)P]⁺, [(H)₄P]⁺, [(CH₃)₄P]⁺, [(Ph)₄P]⁺, [(Ph)₃(CH₃)P]⁺, [(C₆H₁₃)₃(C₁₄H₂₉)P]⁺, [(CH₂OH)₄P]⁺.

4. The composition according to any of claims 1 to 3, **characterized in that** the ionic liquid contains an acetate anion of formula (R₅CO₂)⁻; wherein R₅ is
- a hydrogen atom,
- an alkyl radical selected from methyl, ethyl, propyl, butyl, pentyl, hexyl, heptyl, octyl, nonyl, decyl, undecyl, dodecyl, tridecyl, tetradecyl, and their branched isomers, and their branched isomers,
- an aryl radical selected from phenyl, benzyl,
said alkyl and aryl radicals optionally being substituted.

5. The composition according to claim 4, **characterized in that** the acetate anion is selected from ((CH₃)CO₂)⁻, ((C₅H₁₁)CO₂)⁻, ((CH₃CH₂CH(CH₃)CH₂CH₂)CO₂)⁻, ((C₇H₁₅)CO₂)⁻, ((CH₃CH₂CH₂CH₂CH(CH₃)CH₂CH₂)CO₂)⁻, ((CH₃)₃ CCH₂CH(CH₃)CH₂CH₂CH₂)CO₂)⁻, (CH₃CH(CH₃)CH₂CH₂CH₂CH(CH₃)CH₂)CO₂)⁻, ((C₉H₁₉)CO₂)⁻.

6. The composition according to any one of claims 1 to 5, **characterized in that** it comprises 5 to 20 parts by weight of ionic liquid per 100 parts by weight of epoxy resin present in the composition.

7. A use of a composition (C) according to any of claims 1 to 6, or of a composition comprising:
(A) 70 to 95 parts by weight of an epoxy resin with a viscosity of less than or equal to 20 Pa.s, preferably between 1 and 20 Pa.s, more preferably between 1 and 10 Pa.s, at a temperature between 20°C and 25°C, measured as detailed in the description, and
(B) 5 to 30 parts by weight of a curing agent dispersed in the resin,
per 100 parts by weight of resin present in the composition,
and in that the curing agent is an ionic liquid containing a phosphonium cation of formula P(R₁R₂R₃R₄)⁺ wherein R₁, R₂, R₃ and R₄, are as defined in one of claims 1 or 2, and
- a phosphinate anion of formula (PO₂R₆R₇)⁻ wherein R₆ and R₇, may be identical or different, are
- a hydrogen atom,
- an alkyl radical selected from butyl, pentyl, hexyl, heptyl, octyl, nonyl, decyl, undecyl, dodecyl, tridecyl, tetradecyl, and their branched isomers,
- an aryl radical selected from phenyl, benzyl,
said alkyl and aryl radicals optionally being substituted with a hydrogen atom, an alkyl radical with 2 to 16 carbon atoms, an aryl radical with 6 to 20 carbon atoms, said alkyl and aryl radicals optionally being substituted,
to impregnate a bundle of fibers (F) by a wet process, the fibers (F) being selected from
- organic fibers selected from polyethylene, poly(p-phenylene-2,6-benzobisoxazole) or PBO, aramid, polyamide, flax, polyester fibers;
- inorganic fibers selected from glass, carbon, silicon carbide, and basalt fibers.

8. The use according to claim 7, **characterized in that** when the composition used comprises a curing agent which is an ionic liquid containing a phosphinate anion, said phosphinate anion is of the formula
[[(CH₃)₃CCH₂CH(CH₃)CH₂]₂P(O)O]⁻.

9. A method for manufacturing parts comprising a composite material operating under pressure, **characterized in that** it comprises at least the following steps:
i) impregnating a bundle of fibers (F) selected from
- organic fibers selected from polyethylene, poly(p-phenylene-2,6-benzobisoxazole) or PBO, aramid, polyamide, flax, polyester fibers;
- inorganic fibers selected from glass, carbon, silicon carbide, basalt fibers,
a composition (C) according to any of claims 1 to 6, or
a composition as defined in any one of claims 7 or 8;
ii) winding the impregnated fibers around a bladder or mandrel;
iii) polymerizing the composition (C) at a temperature less than or equal to 170°C.

10. The method according to claim 9, **characterized in that** said bundle of fibers (F) is impregnated with the composition (C) according to any of claims 1 to 6, or the composition as defined in one of claims 7 or 8, with a mass fraction of (F) of between 40 and 70% and a mass fraction of (C) of between 30 and 60%.

11. A use of a composition (C) according to any of claims 1 to 6 for the manufacture of a hydrogen tank, in particular a type II, III, IV and V tank operating under pressure and comprising a composite material, for the on-board storage of hydrogen gas.
